# FASCICULE DE BREVET EUROPEEN

(11) **EP 4 081 698 B1**
(45) Date de publication et mention de la délivrance du brevet: **13.12.2023**
(21) Numéro de dépôt: 21708729.5
(22) Date de dépôt: 15.02.2021
(51) Int. Cl.: F01D 11/00, F01D 11/12, F01D 11/24, F01D 25/12

(54) **TURBINE COMPORTANT UN ESPACE SECONDAIRE INTERNE ÉQUIPÉ D'AILETTES DE CORRECTION DE GIRATION D'UN FLUX D'AIR**
TURBINE, DIE EINEN INNEREN SEKUNDÄRRAUM AUFWEIST, DER MIT RIPPEN ZUM KORRIGIEREN DER KREISELBEWEGUNG EINES LUFTSTROMS AUSGESTATTET IST
TURBINE HAVING AN INTERNAL SECONDARY SPACE EQUIPPED WITH FINS FOR CORRECTING GYRATION OF AN AIRFLOW

(30) Priorité: 18.02.2020 FR 2001576
(43) Date de publication de la demande: 02.11.2022
(73) Titulaire: SAFRAN AIRCRAFT ENGINES, 75015 Paris (FR)
(72) Inventeur: GIRARDEAU, Julian Nicolas, 77550 MOISSY-CRAMAYEL (FR)
(74) Mandataire: Brevalex
(86) Numéro de dépôt international: PCT/FR2021/050263
(87) Numéro de publication internationale: WO 2021/165605

(56) Documents cités:
- EP-A1- 3 324 001
- WO-A1-2012/150424
- FR-A1- 3 027 343
- GB-A- 2 533 221

## Description

### DOMAINE TECHNIQUE

L'invention concerne l'étanchéité dans une turbine de turbomachine, entre un élément mobile en rotation et un élément fixe, tel un élément de rotor et une roue aubagée fixe de distributeur entourant cet élément de rotor.

### ÉTAT DE LA TECHNIQUE ANTÉRIEURE

Une turbine de turbomachine comporte généralement un moyeu tournant autour d'un axe principal, qui porte des étages de pales mobiles espacés les uns des autres le long de cet axe, et un carter fixe de révolution entourant l'ensemble.

Entre deux étages mobiles consécutifs est interposé un étage de pales fixes, appelé distributeur, permettant de redresser l'air longitudinalement avant qu'il ne traverse l'étage mobile suivant.

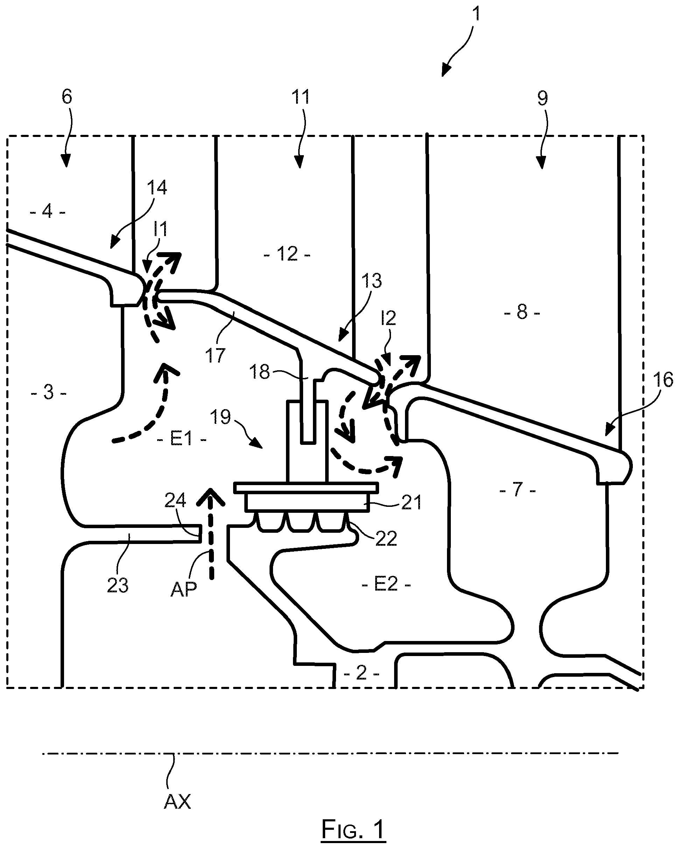

Sur la figure 1, une portion 1 de turbine de turbomachine comporte un rotor 2 tournant autour d'un axe longitudinal AX, ce rotor comprenant un premier disque 3 qui porte une première séries d'aubes rotatives 4 radiales formant un premier étage mobile 6, et un deuxième disque 7 portant une deuxième série d'aubes rotatives 8 radiales formant un deuxième étage mobile 9.

Cette portion comporte un étage fixe de distributeur 11 interposé longitudinalement entre ces deux étages mobiles 6 et 9, qui comprend une série d'aubes fixes 12 portées à leurs extrémités radialement externes par un carter fixe non représenté entourant l'ensemble et formant avec celui-ci un stator.

Chaque aube fixe 12 comporte à son extrémité radialement interne une plateforme 13, et les plateformes des différentes aubes 12 sont circonférentiellement contiguës les unes aux autres pour former conjointement une virole interne du distributeur 11.

De manière analogue, chaque aube rotative 4 comporte également une plateforme 14 à son extrémité radialement interne, et chaque aube rotative 8 comporte à son extrémité radialement interne une plateforme 16. Comme visible sur la figure 1, les plateformes des différentes aubes forment conjointement une paroi ayant globalement une forme de portion de cône. Cette paroi sépare un espace principal annulaire, appelé veine primaire et repéré par VP qui est occupé par les aubes 4, 8, 12 et traversé par un flux de gaz chaud, d'un espace secondaire interne entourant le rotor, appelé cavité sous distributeur et qui est maintenu à une température inférieure à celle du flux chaud.

Chaque plateforme 13 du distributeur 11 comporte un corps 17 ayant une forme générale de portion de cylindre qui porte une nervure 18 s'étendant radialement vers l'axe AX. L'ensemble des nervures 18 des plateformes 13 a ainsi une forme de couronne plane coaxiale à l'axe AX.

L'ensemble des nervures 18 porte une virole interne 19, portant à sa face interne un élément abradable 21 tourné vers l'axe AX, et contre lequel viennent frotter des léchettes 22 portées par le rotor 2. Les léchettes 22 sont situées entre le premier disque 3 et le deuxième disque 7, pour établir une barrière entre un espace secondaire amont E1 interne situé entre le premier disque 3 et la virole 19, et un espace secondaire aval E2 interne situé entre la virole 19 et le deuxième disque 7.

Comme visible sur la figure 1, les léchettes 22 et les deux disques 3 et 7 font partie du rotor 2. Un flux d'air de purge AP est soufflé à travers une ouverture 24 de du rotor 2 vers l'espace E1 pour le refroidir. Une partie de cet air est évacué par un interstice I1 séparant la plateforme 14 de l'aube 4, de la plateforme 13 de l'aube fixe 12. L'autre partie de cet air traverse la barrière formée par les léchettes 22 et l'abradable 21 pour purger l'espace secondaire aval E2, cette autre partie étant évacuée par un interstice I2 séparant la plateforme 13 de l'aube fixe 12 de la plateforme 16 de l'aube 8.

L'air de purge AP permet de limiter l'entrée d'air du flux chaud par les interstices I1 et I2 pour à la fois limiter les fuites d'air du flux chaud et permettre un maintien des espaces secondaire E1 et E2 à une température voulue.

Néanmoins, lorsque l'air de purge AP traverse les interstices I1 et I2 pour être évacué, il génère localement des tourbillons dans le flux chaud, ce qui engendre une baisse de rendement encore dénommée perte par mélange.

Dans l'agencement divulgué dans le document EP3324001A1 des flasques contrarient la circulation du flux, mais ils s'avèrent insuffisants pour réduire les pertes par mélange.

Le but de l'invention est d'apporter une solution pour remédier à cet inconvénient.

### EXPOSÉ DE L'INVENTION

A cet effet, l'invention a pour objet une turbine de turbomachine s'étendant autour d'un axe, comprenant un rotor pourvu d'une léchette d'étanchéité et un stator entourant le rotor, le rotor étant monté rotatif dans le stator, le stator comprenant un distributeur pourvu d'une plateforme à partir de laquelle s'étend selon une direction radiale au moins une aube fixe, cette plateforme portant un élément d'étanchéité abradable principal coopérant avec la léchette, la plateforme délimitant radialement une séparation entre un espace principal traversé par un flux d'air chaud et un espace secondaire de circulation d'air qui s'étend radialement entre la léchette et l'espace principal, le rotor comportant une ouverture par laquelle est soufflé de l'air pour traverser l'espace secondaire et atteindre l'espace principal, caractérisé en ce que le distributeur comporte un flasque s'étendant principalement radialement portant des ailettes redresseuses situées dans l'espace secondaire pour redresser le flux d'air traversant l'espace secondaire afin de modifier sa giration avant son évacuation vers l'espace principal.

Avec cette solution, la giration du flux de purge réinjecté dans le flux chaud par les interstices est proche de la giration du flux chaud, de façon à diminuer les pertes dites de mélange.

L'invention concerne également une turbine ainsi définie, dans laquelle l'espace secondaire comprend un espace secondaire amont et un espace secondaire aval séparés l'un de l'autre par une barrière d'étanchéité principale comprenant au moins la léchette glissant le long de l'élément abradable principal disposé en regard de la léchette, l'ouverture du rotor débouchant dans l'espace secondaire amont, la turbine comprenant d'une part des ailettes redresseuses amont portées par le distributeur et situées dans l'espace secondaire amont, et d'autre part des ailettes redresseuses aval portées par le distributeur et situées dans l'espace secondaire aval pour redresser le flux d'air traversant l'espace secondaire aval afin de modifier sa giration avant son évacuation vers l'espace principal.

L'invention concerne également une turbine ainsi définie, dans laquelle les ailettes redresseuses amont sont agencées pour réduire la giration du flux traversant l'espace secondaire amont, et dans lequel les ailettes redresseuses aval sont agencées pour augmenter la giration du flux traversant l'espace secondaire aval.

L'invention concerne également une turbine ainsi définie, comprenant une barrière d'étanchéité secondaire amont située dans l'espace secondaire amont, en amont des ailettes amont, l'ouverture du rotor débouchant entre la barrière d'étanchéité secondaire amont et la barrière d'étanchéité principale, pour que l'essentiel de l'air admis par l'ouverture soit redressé par les ailettes amont avant de quitter l'espace secondaire amont pour rejoindre l'espace principal.

L'invention concerne également une turbine ainsi définie, comprenant une barrière d'étanchéité secondaire aval située dans l'espace secondaire aval en aval des ailettes redresseuse aval, et dans lequel l'espace secondaire aval est alimenté par de l'air provenant de l'ouverture du rotor et traversant la barrière d'étanchéité principale pour rejoindre l'espace principal.

L'invention concerne également une turbine ainsi définie, dans laquelle la barrière d'étanchéité secondaire amont comporte une léchette amont portée par le rotor et disposée en regard d'un élément abradable amont porté par le distributeur.

L'invention concerne également une turbine ainsi définie, dans laquelle la barrière d'étanchéité secondaire aval comporte une léchette aval portée par le rotor et disposée en regard d'un élément abradable aval porté par le distributeur.

L'invention concerne également une turbine ainsi définie, dans laquelle l'élément d'étanchéité abradable principal est relié à l'élément abradable amont par l'intermédiaire des ailettes redresseuses amont, et dans laquelle l'élément d'étanchéité abradable principal est relié à l'élément d'étanchéité abradable aval par l'intermédiaire des ailettes redresseuses aval.

L'invention concerne également une turbine ainsi définie, dans laquelle les ailettes redresseuses présentent des formes de pales.

L'invention concerne également une turbomachine comprenant une turbine ainsi définie.

### BRÈVE DESCRIPTION DES DESSINS

Figure 1 est une vue en coupe longitudinale d'une portion de turbine connue ;
Figure 2 est une vue en coupe longitudinale d'une portion de turbine selon l'invention ;
Figure 3 est une vue plus détaillée de la portion de turbine selon l'invention.

### EXPOSÉ DÉTAILLÉ DE L'INVENTION

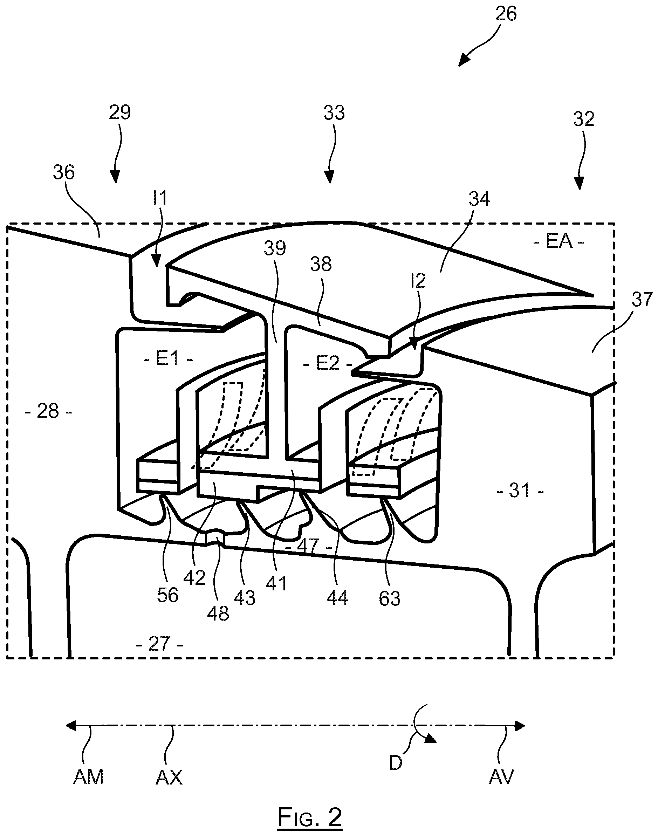

Sur la figure 2, une portion 26 de turbine de turbomachine comporte un rotor 27 tournant autour d'un axe longitudinal AX, ce rotor comprenant un premier disque 28 qui porte une première séries d'aubes rotatives non représentées formant un premier étage mobile 29, et un deuxième disque 31 portant une deuxième série d'aubes rotatives non représentées formant un deuxième étage mobile 32.

Elle comporte un étage fixe de distributeur 33 interposé longitudinalement entre ces deux étages mobiles 29 et 32, qui comprend une série d'aubes fixes non représentées portées à leurs extrémités radialement externes par un carter fixe non représenté entourant l'ensemble et formant avec le distributeur 33 un stator.

Chaque aube fixe comporte à son extrémité radialement interne une plateforme 34, et les plateformes des différentes aubes sont circonférentiellement contiguës unes aux autres pour former conjointement une virole interne du distributeur 33.

Chaque aube rotative du premier étage comporte également une plateforme 36 à son extrémité radialement interne, et chaque aube rotative du deuxième étage comporte à son extrémité radialement interne une plateforme 37. Les plateformes forment conjointement une paroi ayant globalement une forme de portion de cône. Cette paroi sépare un espace principal EA annulaire, appelé veine primaire qui est occupé par les aubes et traversé par un flux de gaz chaud, d'un espace secondaire interne entourant le rotor, appelé cavité sous distributeur, dont la température est inférieure à celle du flux chaud.

Chaque plateforme 34 du distributeur 33 comporte un corps 38 ayant une forme générale de portion de cylindre qui porte une nervure 39 s'étendant radialement vers l'axe AX. L'ensemble des nervures 39 des plateformes 34 a ainsi une forme de couronne plane coaxiale à l'axe AX.

L'ensemble des nervures 39 porte un support interne 41, portant à sa face interne un élément d'étanchéité abradable principal 42 tourné vers l'axe AX, et contre lequel viennent frotter deux léchettes 43, 44, portées par le rotor 27. Ces léchettes 43, 44 sont situées entre le premier disque 28 et le deuxième disque 31, et elles glissent le long de l'élément abradable principal 42 pour former avec celui-ci une barrière principale B0, centrale, séparant un espace secondaire amont E1 situé entre le premier disque 28 et le support interne 41, d'un espace secondaire aval E2 interne situé entre le support interne 41 et le deuxième disque 31.

Les léchettes 43, 44, sont portées par un moyeu 47 faisant partie du rotor 27 en étant rigidement solidaire des deux disques 28 et 31 de ce rotor. Un flux d'air de purge AP est soufflé à travers une ouverture 48 du rotor qui est formée dans ce moyeu 47, ce flux d'air provenant d'une région interne du rotor pour circuler vers l'espace secondaire E1.

Compte tenu de la rotation du rotor, l'air AP admis dans l'espace E1 a une forte giration, c'est-à-dire une vitesse dont la composante circonférentielle est importante par rapport à sa composante radiale.

Selon l'invention, le distributeur 33 porte, ici au niveau d'un flasque 49 fixé au bord amont du support 41 une série d'ailettes redresseuses 51 agencées pour centrifuger l'air de purge AP afin de réduire sa giration. Plus concrètement, ces ailettes redressent le flux pour augmenter sa composante radiale et/ou réduire sa composante circonférentielle au cours de son cheminement vers l'interstice I1.

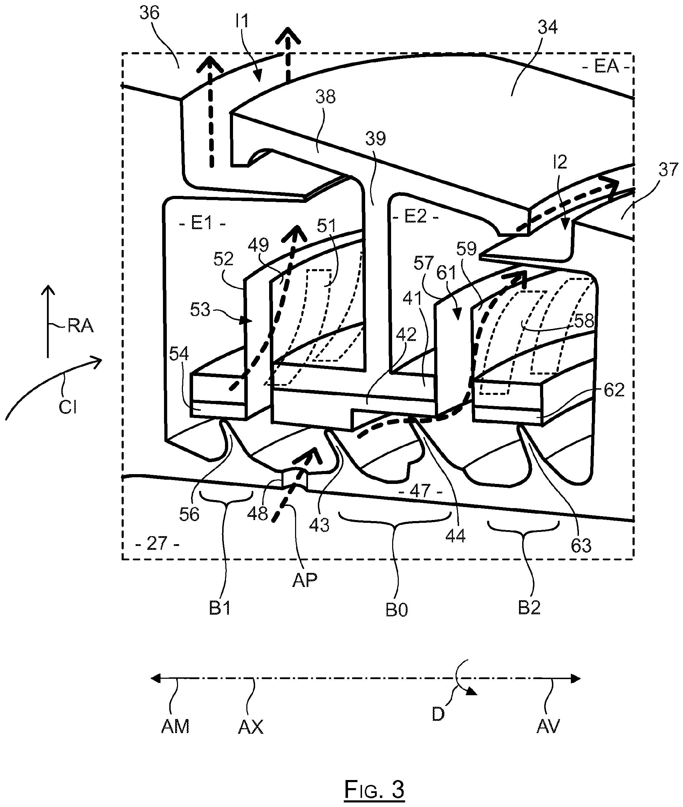

Comme visible sur les figures 2 et 3, le flasque 49 annulaire de forme générale plane et d'orientation normale à l'axe AX, et les ailettes 51 que porte cette couronne s'étendent perpendiculairement à celle-ci tout en ayant une orientation globale inclinée à environ 45° par rapport à la direction circonférentielle CI. Ces ailettes 51 sont circonférentiellement espacées les unes des autres de façon régulière sur la face amont du flasque 49.

Dans l'exemple des figures, l'extrémité la plus proche de l'axe AX de chaque ailette 51 a une orientation circonférentielle CI alors que son extrémité opposée, c'est-à-dire la plus proche de l'interstice I1, a une orientation radiale RA. Avantageusement, ces ailettes 51 sont incurvées, ici en arc de cercle, pour accroître leur effet de centrifugation. Cette incurvation est orientée selon un sens correspondant à un rapprochement de la région centrale d'ailette vers l'axe central. Ainsi, les ailettes 51 sont agencées pour réduire la giration du flux d'air lorsque le rotor tourne en sens direct repéré par D sur les figures. Plus généralement, chaque ailette 51 a une forme de pale ayant un axe d'envergure EV orienté orthoradialement.

Complémentairement, pour mieux canaliser l'air AP à centrifuger, un autre flasque amont 52 parallèle au flasque 49 est fixé aux bords amonts des ailettes 51 pour délimiter avec le flasque 49 un couloir annulaire amont 53 circonférentiellement partitionné par les ailettes 51. Ce flasque amont 52 porte en outre un élément abradable amont 54 coopérant avec une léchette amont 56 portée par le moyeu 47 pour former une barrière d'étanchéité secondaire amont B1.

L'ouverture 48 d'admission de l'air de purge AP débouche ainsi dans un espace annulaire délimité en amont par la barrière B1 et en aval par la barrière principale B0. L'essentiel de l'air de purge AP est ainsi évacué par le couloir annulaire amont 53 de façon à être efficacement centrifugé afin de former un flux ayant une giration réduite lorsqu'il traverse l'interstice I1 pour quitter l'espace secondaire amont E1, comme représenté par les flèches en traits discontinus.

Dans l'exemple des figures 2 et 3, l'espace secondaire aval E2 est alimenté par de l'air de purge provenant de l'ouverture 48 et ayant traversé la barrière principale B0, celle-ci étant dimensionnée pour autoriser un passage d'air qui est calibré à cet effet.

Comme visible sur les figures, cet air de purge aval présente une faible giration une fois qu'il a traversé la barrière principale. Selon l'invention, cet air est redressé par d'autres ailettes pour augmenter sa giration lorsqu'il quitte cet espace secondaire interne aval par l'interstice 12.

A cet effet, le bord aval de l'élément abradable principal 42 porte un flasque aval 57 annulaire de forme générale plane et d'orientation normale à l'axe AX, qui porte une série d'ailettes redresseuses 58.

Les ailettes 58 que porte cette autre couronne s'étendent perpendiculairement à celle-ci, vers l'aval, tout en ayant une orientation globale inclinée à environ 45° par rapport à la direction circonférentielle CI. Ces ailettes 58 sont circonférentiellement espacées les unes des autres de façon régulière à la face aval du flasque 57.

Dans l'exemple des figures, l'extrémité la plus proche de l'axe AX de chaque ailette 58 a ainsi une orientation radiale RA alors que son extrémité opposée, c'est-à-dire la plus proche de l'interstice I2, a une orientation circonférentielle CI. Avantageusement, ces ailettes 58 sont incurvées, ici en arc de cercle, pour accroître leur effet de redressement. Cette incurvation est orientée selon un sens correspondant à un écartement de la région centrale d'ailette de l'axe central. Ainsi, les ailettes 58 sont agencées pour augmenter la giration du flux d'air lorsque le rotor tourne en sens direct repéré par D sur les figures. Plus généralement, chaque ailette 58 a ainsi une forme de pale ayant un axe d'envergure EV orienté orthoradialement.

Complémentairement, pour mieux canaliser l'air AP à redresser, un autre flasque aval 59 parallèle au flasque 57 est fixé aux bords aval des ailettes redresseuses 58 pour délimiter avec le flasque 57 un couloir annulaire aval 61 partitionné circonférentiellement par les ailettes 58. Ce flasque aval 59 porte en outre un élément abradable aval 62 coopérant avec une léchette aval 63 portée par le moyeu 47 pour former une barrière d'étanchéité secondaire aval B2.

L'air de purge ayant traversé la barrière principale B0 débouche ainsi dans un espace annulaire aval délimité en aval par la barrière aval B2. L'essentiel de l'air de purge arrivant dans cet espace est ainsi évacué par le couloir annulaire aval 61 de façon à être efficacement redressé pour augmenter sa giration. Plus concrètement, les ailettes 58 redressent cet air pour augmenter sa composante circonférentielle et/ou réduire sa composante radiale, pour lui donner une giration plus importante lorsqu'il traverse l'interstice I2 en quittant l'espace secondaire aval E2, comme représenté par les flèches en traits discontinus.

Comme on l'aura compris, l'invention permet de réduire la giration, habituellement forte, de l'air de purge s'évacuant par l'interstice I1 situé en amont du distributeur et d'augmenter la giration, habituellement faible, de l'air de purge s'évacuant par l'interstice I2 situé en aval du distributeur.

Ainsi, l'air de purge sortant par les deux interstices I1 et I2 présente une giration proche de celle du flux chaud traversant les aubes du distributeur, ce qui permet de réduire la perturbation apportée par cette réintroduction dans le flux chaud, encore appelées pertes par mélange.

Cette optimisation de la giration de l'air de purge réintroduit par les interstices I1 et I2 permet en outre d'améliorer l'écoulement de l'air de purge à travers ces interstice, pour y réduire les turbulences, ce qui permet de limiter le flux d'air chaud susceptible d'entrer par les interstices I1 et I2.

Dans l'exemple des figures, les ailettes redresseuses amont 51 sont portées par les flasques 49 et 52 pour former une roue redresseuse amont, et les ailettes redresseuses aval 58 sont portées par les flasques 57 et 59 pour former une roue redresseuse aval. Les barrières amont B1 et aval B2 apportent des étanchéités secondaires qui permettent d'accroître la correction de giration en assurant que la totalité, ou tout au moins l'essentiel du flux de purge est redressé par les ailettes avant d'être évacué à travers les interstices.

D'autres agencements d'ailettes de redressement sont envisageables sans sortir du cadre de l'invention, dès lors qu'ils permettent de modifier la giration de l'écoulement de l'air de purge avant sa sortie de l'espace secondaire interne.

Par ailleurs, l'invention est présentée sur les figures selon un mode de réalisation dans lequel la barrière principale ainsi que la barrière amont et la barrière aval sont formées par des joints de type labyrinthe, c'est-à-dire comportant une ou des léchettes disposées en regard d'un élément abradable. L'invention s'applique aussi bien à une structure globalement analogue dans laquelle les barrières d'étanchéité sont obtenues avec d'autres solutions techniques. Notamment, les barrières amont, aval et principale peuvent être formées par des joints dits à brosse, c'est-à-dire dont une surface porte des brins dont les extrémités sont en appui sur une autre face pour assurer l'étanchéité recherchée.

## Revendications

1. Turbine de turbomachine s'étendant autour d'un axe (AX), comprenant un rotor (27) pourvu d'une léchette (44) d'étanchéité et un stator entourant le rotor (27), le rotor (27) étant monté rotatif dans le stator, le stator comprenant un distributeur (33) pourvu d'une plateforme (34) à partir de laquelle s'étend selon une direction radiale au moins une aube fixe, la plateforme (34) portant un élément d'étanchéité abradable principal (42) coopérant avec la léchette (44), la plateforme (34) délimitant radialement une séparation entre un espace principal (EA) traversé par un flux d'air chaud et un espace secondaire (E1, E2) de circulation d'air qui s'étend radialement entre la léchette (44) et l'espace principal (EA), le rotor (27) comportant une ouverture (48) par laquelle est soufflé de l'air (AP) pour traverser l'espace secondaire (E1, E2) et atteindre l'espace principal (EA), **caractérisée en ce que** le distributeur (33) comporte un flasque (49, 57) s'étendant principalement radialement portant des ailettes redresseuses (51, 58) qui s'étendent dans l'espace secondaire (E1, E2) pour redresser le flux d'air traversant l'espace secondaire (E1, E2) afin de modifier sa giration avant son évacuation vers l'espace principal (EA).

2. Turbine selon la revendication 1, dans laquelle l'espace secondaire comprend un espace secondaire amont (E1) et un espace secondaire aval (E2) séparés l'un de l'autre par une barrière d'étanchéité principale (B0) comprenant la léchette (43, 44) et l'élément d'étanchéité abradable principal (42) disposé en regard de la léchette (43, 44), l'ouverture (48) du rotor (27) débouchant dans l'espace secondaire amont (E1), la turbine comprenant d'une part des ailettes redresseuses amont (51) portées par le distributeur (33) et situées dans l'espace secondaire amont (E1), et d'autre part des ailettes redresseuses aval (58) portées par le distributeur (33) et situées dans l'espace secondaire aval (E2) pour redresser le flux d'air traversant l'espace secondaire aval (E2) afin de modifier sa giration avant son évacuation vers l'espace principal (EA).

3. Turbine selon la revendication 2, dans laquelle les ailettes redresseuses amont (51) sont agencées pour réduire la giration du flux traversant l'espace secondaire amont (E1), et dans lequel les ailettes redresseuses aval (58) sont agencées pour augmenter la giration du flux traversant l'espace secondaire aval (E2).

4. Turbine selon la revendication 2 ou 3, comprenant une barrière d'étanchéité secondaire amont (B1) située dans l'espace secondaire amont (E1), en amont des ailettes amont (51), l'ouverture (48) du rotor (27) débouchant entre la barrière d'étanchéité secondaire amont (B1) et la barrière d'étanchéité principale (B0), pour que l'essentiel de l'air admis par l'ouverture (48) soit redressé par les ailettes amont (51) avant de quitter l'espace secondaire amont (E1) pour rejoindre l'espace principal (EA).

5. Turbine selon la revendication 4, comprenant une barrière d'étanchéité secondaire aval (B2) située dans l'espace secondaire aval (E2) en aval des ailettes redresseuses aval (58), et dans lequel l'espace secondaire aval (E2) est alimenté par de l'air provenant de l'ouverture (48) du rotor (27) et traversant la barrière d'étanchéité principale (B0) pour rejoindre l'espace principal (EA).

6. Turbine selon la revendication 4 ou 5, dans laquelle la barrière d'étanchéité secondaire amont (B1) comporte une léchette amont (56) portée par le rotor (27) et disposée en regard d'un élément abradable amont (54) porté par le distributeur (33).

7. Turbine selon la revendication 5, dans laquelle la barrière d'étanchéité secondaire aval (B2) comporte une léchette aval (63) portée par le rotor (27) et disposée en regard d'un élément abradable aval (62) porté par le distributeur (33).

8. Turbine selon les revendications 6 et 7, dans laquelle l'élément d'étanchéité abradable principal (42) est relié à l'élément abradable amont (54) par l'intermédiaire des ailettes redresseuses amont (51), et dans laquelle l'élément d'étanchéité abradable principal (42) est relié à l'élément d'étanchéité abradable aval (62) par l'intermédiaire des ailettes redresseuses aval (58).

9. Turbine selon l'une des revendications précédentes, dans laquelle les ailettes redresseuses (51, 58) présentent des formes de pales.

10. Turbomachine comprenant une turbine selon l'une des revendications précédentes.

## Patentansprüche

1. Turbine eines Turbotriebwerks, die sich um eine Achse (AX) herum erstreckt, umfassend einen Rotor (27), der mit einer Dichtungslippe (44) versehen ist, und einen Stator, der den Rotor (27) umgibt, wobei der Rotor (27) drehend in dem Stator montiert ist, wobei der Stator einen Verteiler (33) umfasst, der mit einer Plattform (34) versehen ist, aus der sich entlang einer radialen Richtung mindestens ein festes Schaufelblatt erstreckt, wobei die Plattform (34) ein Hauptabstreifdichtelement (42) trägt, das mit der Lippe (44) zusammenwirkt, wobei die Plattform (34) radial eine Trennung zwischen einem Hauptraum (EA), der von einem Warmluftstrom durchquert wird, und einem Sekundärraum (E1, E2) zur Luftzirkulation begrenzt, der sich radial zwischen der Lippe (44) und dem Hauptraum (EA) erstreckt, wobei der Rotor (27) eine Öffnung (48) beinhaltet, durch die Luft (AP) geblasen wird, um den Sekundärraum (E1, E2) zu durchqueren, und den Hauptraum (EA) zu erreichen, **dadurch gekennzeichnet, dass** der Verteiler (33) einen Flansch (49, 57) beinhaltet, der sich hauptsächlich radial erstreckt, und dabei Richtrippen (51, 58) trägt, die sich in dem Sekundärraum (E1, E2) erstrecken, um den Luftstrom, der den Sekundärraum (E1, E2) durchquert, zu richten, um dessen Kreiselbewegung vor dessen Austrag in den Hauptraum (EA) zu ändern.

2. Turbine nach Anspruch 1, wobei der Sekundärraum einen stromaufwärts gelegenen Sekundärraum (E1) und einen stromabwärts gelegenen Sekundärraum (E2) umfasst, die durch eine Hauptdichtsperre (B0) voneinander getrennt sind, die die Lippe (43, 44) und das Hauptabstreifdichtelement (42) umfasst, das gegenüber der Lippe (43, 44) angeordnet ist, wobei die Öffnung (48) des Rotors (27) in den stromaufwärts gelegenen Sekundärraum (E1) mündet, wobei die Turbine einerseits stromaufwärts gelegene Richtrippen (51), die von dem Verteiler (33) getragen werden, und sich in dem stromaufwärts gelegenen Sekundärraum (E1) befinden, und andererseits stromabwärts gelegene Richtrippen (58), die von dem Verteiler (33) getragen werden, und sich in dem stromabwärts gelegenen Sekundärraum (E2) befinden, umfasst, um den Luftstrom, der den stromabwärts gelegenen Sekundärraum (E2) durchquert zu richten, um dessen Kreiselbewegung vor dessen Austrag in den Hauptraum (EA) zu ändern.

3. Turbine nach Anspruch 2, wobei die stromaufwärts gelegenen Richtrippen (51) angeordnet sind, um die Kreiselbewegung des Stroms, der den stromaufwärts gelegenen Sekundärraum (E1) durchquert, zu reduzieren, und wobei die stromabwärts gelegenen Richtrippen (58) angeordnet sind, um die Kreiselbewegung des Stroms, der den stromabwärts gelegenen Sekundärraum (E2) durchquert, zu erhöhen.

4. Turbine nach Anspruch 2 oder 3, umfassend eine stromaufwärts gelegene Sekundärdichtsperre (B1), die sich im stromaufwärts gelegenen Sekundärraum (E1), stromaufwärts der stromaufwärts gelegenen Richtrippen (51) gelegen befindet, wobei die Öffnung (48) des Rotors (27) zwischen die stromaufwärts gelegene Sekundärdichtsperre (B1) und die Hauptdichtsperre (B0) mündet, damit das Wesentliche der durch die Öffnung (48) eingelassenen Luft durch die stromaufwärts gelegenen Richtrippen (51) gerichtet wird, bevor der stromaufwärts gelegene Sekundärraum (E1) verlassen wird, um den Hauptraum (EA) aufzusuchen.

5. Turbine nach Anspruch 4, umfassend eine stromabwärts gelegene Sekundärdichtsperre (B2), die sich im stromabwärts gelegenen Sekundärraum (E2), stromabwärts der stromabwärts gelegenen Richtrippen (58) gelegen befindet, und wobei der stromabwärts gelegene Sekundärraum (E2) mit der Luft versorgt wird, die aus der Öffnung (48) des Rotors (27) stammt, und die Hauptdichtsperre (B0) durchquert, um den Hauptraum (EA) aufzusuchen.

6. Turbine nach Anspruch 4 oder 5, wobei die stromaufwärts gelegene Sekundärdichtsperre (B1) eine stromaufwärts gelegene Lippe (56) beinhaltet, die von dem Rotor (27) getragen wird, und gegenüber einem stromaufwärts gelegenen Abstreifelement (54) angeordnet ist, das von dem Verteiler (33) getragen wird.

7. Turbine nach Anspruch 5, wobei die stromabwärts gelegene Sekundärdichtsperre (B2) eine stromabwärts gelegene Lippe (63) beinhaltet, die von dem Rotor (27) getragen wird, und gegenüber einem stromabwärts gelegenen Abstreifelement (62) angeordnet ist, das von dem Verteiler (33) getragen wird.

8. Turbine nach den Ansprüchen 6 und 7, wobei das Hauptabstreifdichtelement (42) anhand der stromaufwärts gelegenen Richtrippen (51) mit dem stromaufwärts gelegenen Abstreifelement (54) verbunden ist, und wobei das Hauptabstreifdichtelement (42) anhand der stromabwärts gelegenen Richtrippen (58) mit dem stromabwärts gelegenen Abstreifdichtelement (62) verbunden ist.

9. Turbine nach einem der vorstehenden Ansprüche, wobei die Richtrippen (51, 58) Schaufelformen aufweisen.

10. Turbotriebwerk, umfassend eine Turbine nach einem der vorstehenden Ansprüche.

## Claims

1. A turbomachine turbine extending about an axis (AX), comprising a rotor (27) provided with a sealing lip (44) and a stator surrounding the rotor (27), the rotor (27) being rotatably mounted in the stator, the stator comprising a distributor (33) provided with a platform (34) from which at least one stationary vane extends along a radial direction, the platform (34) carrying a main abradable sealing element (42) cooperating with the lip (44), the platform (34) radially delimiting a separation between a main space (EA) through which a hot air flow passes and a secondary air circulation space (E1, E2) which radially extends between the lip (44) and the main space (EA), the rotor (27) comprising an aperture (48) through which air (AP) is blown to pass through the secondary space (E1, E2) and reach the main space (EA), **characterised in that** the distributor (33) comprises a mainly radially extending flange (49, 57) carrying straightening fins (51, 58) which extend into the secondary space (E1, E2) to straighten the air flow passing through the secondary space (E1, E2) so as to modify its gyration before it is discharged towards the main space (EA).

2. The turbine according to claim 1, wherein the secondary space comprises an upstream secondary space (E1) and a downstream secondary space (E2) separated from each other by a main sealing barrier (B0) comprising the lip (43, 44) and the main abradable sealing element (42) disposed opposite to the lip (43, 44), the aperture (48) of the rotor (27) leading to the upstream secondary space (E1), the turbine comprising, on the one hand, upstream straightening fins (51) carried by the distributor (33) and located in the upstream secondary space (E1) and, on the other hand, downstream straightening fins (58) carried by the distributor (33) and located in the downstream secondary space (E2) in order to straighten the air flow passing through the downstream secondary space (E2) so as to modify its gyration before it is discharged towards the main space (EA).

3. The turbine according to claim 2, wherein the upstream straightening fins (51) are arranged to reduce gyration of the flow passing through the upstream secondary space (E1), and wherein the downstream straightening fins (58) are arranged to increase gyration of the flow passing through the downstream secondary space (E2).

4. The turbine according to claim 2 or 3, comprising an upstream secondary sealing barrier (B1) located in the upstream secondary space (E1), upstream of the upstream fins (51), the aperture (48) of the rotor (27) leading between the upstream secondary sealing barrier (B1) and the main sealing barrier (B0), so that most of the air admitted through the aperture (48) is straightened by the upstream fins (51) before leaving the upstream secondary space (E1) to join the main space (EA).

5. The turbine according to claim 4, comprising a downstream secondary sealing barrier (B2) located in the downstream secondary space (E2) downstream of the downstream straightening fins (58), and wherein the downstream secondary space (E2) is supplied with air from the aperture (48) of the rotor (27) and passing through the main sealing barrier (B0) to join the main space (EA).

6. The turbine according to claim 4 or 5, wherein the upstream secondary sealing barrier (B1) comprises an upstream lip (56) carried by the rotor (27) and disposed opposite to an upstream abradable element (54) carried by the distributor (33).

7. The turbine according to claim 5, wherein the downstream secondary sealing barrier (B2) comprises a downstream lip (63) carried by the rotor (27) and disposed opposite to a downstream abradable element (62) carried by the distributor (33).

8. The turbine according to claims 6 and 7, wherein the main abradable sealing element (42) is connected to the upstream abradable element (54) via the upstream straightening fins (51), and wherein the main abradable sealing element (42) is connected to the downstream abradable sealing element (62) via the downstream straightening fins (58).

9. The turbine according to one of the preceding claims, wherein the straightening fins (51, 58) have blade shapes.

10. A turbomachine comprising a turbine according to one of the preceding claims.
